# EUROPEAN PATENT SPECIFICATION

(11) **EP 1 516 855 B1**
(45) Date of publication and mention of the grant of the patent: **01.03.2017**
(21) Application number: 03020939.9
(22) Date of filing: 16.09.2003
(51) Int. Cl.: C01G 25/00, B01J 23/10, B01J 21/06, B01J 23/63, B01D 53/94, B01J 35/00, B01J 37/02

(54) **CERIUM-ZIRCONIUM COMPOSITE METAL OXIDE WITH A CERIUM OXIDE CORE SURROUNDED BY ZIRCONIUM OXIDE**
CERIUM-ZIRKONIUM-KOMPOSITOXID MIT EINEM CERIUMOXIDKERN UND EINER ZIRKONIUMOXIDHÜLLE
OXYDE COMPOSITE A BASE D'OXYDES DE CÉRIUM ET DE ZIRCONIUM COMPRENANT UN NOYAU D'OXYDE DE CÉRIUM ENVELOPPÉ D'OXYDE DE ZIRCONIUM

(43) Date of publication of application: 23.03.2005
(73) Proprietor: TOYOTA JIDOSHA KABUSHIKI KAISHA, Toyota-shi, Aichi-ken, 471-8571 (JP)
(72) Inventor: Kuno, Oji, Toyota-shi, Aichi 471-8571 (JP)
(74) Representative: TBK

(56) References cited:
- EP-A- 0 614 854
- EP-A- 0 955 267
- FR-A- 2 756 819
- US-A- 5 693 299
- PATENT ABSTRACTS OF JAPAN vol. 014, no. 211 (C-0715), 2 May 1990 (1990-05-02) & JP 02 048418 A (CATALYSTS & CHEM IND CO LTD), 19 February 1990 (1990-02-19)

## Description

### BACKGROUND OF THE INVENTION

### 1. Field of the Invention

The present invention relates to a cerium-zirconium composite metal oxide and, more particularly, to a cerium-zirconium composite metal oxide which is suitable for use as a promoter for an exhaust gas purifying catalyst for an internal combustion engine.

### 2. Description of the Related Art

Exhaust gas emitted from an internal combustion engine such as an automobile engine includes such substances as nitrogen oxides (NOx), carbon monoxide (CO) and hydrocarbons (HC). These harmful substances can be neutralized by means of a three-way catalyst which oxidizes CO and HC and reduces NOx into O₂.

Such a three-way catalyst is generally composed of a support made of an oxide such as γ-alumina, and a catalyst component consisting of a noble metal such as platinum (Pt), palladium (Pd) or rhodium (Rh) supported on the support.

In order for the oxidation of CO and HC and reduction of NOx to proceed efficiently on the three-way catalyst, it is necessary that the air-fuel ratio in the internal combustion engine is properly controlled and that the composition of the exhaust gas lies within a narrow, particular range. In reality, however, the composition of the exhaust gas experiences some variations due to such factor as a delay in the operation of a control system, and may deviate out of the above-mentioned narrow range.

In a cerium-zirconium composite metal oxide, Ce atoms can change the valence thereof between 3 and 4. In an oxidizing atmosphere including a relatively large amount of O₂ the Ce atom changes the valence from 3 to 4 and absorbs oxygen, while in a reducing atmosphere containing a relatively large amount of CO and HC the Ce atom changes the valence from 4 to 3 and releases oxygen, thus demonstrating an oxygen storage capacity (OSC).

Therefore, including the cerium-zirconium composite metal oxide in an exhaust gas purifying catalyst has an effect of mitigating the variations in the exhaust gas composition in the vicinity of catalyst component, thereby causing the purification of exhaust gas to proceed more efficiently.

In addition, absorption of oxygen by the cerium-zirconium composite metal oxide is accompanied by the generation of a significant amount of heat, and the heat can be used to warm up the catalyst when starting up the engine, thus making it possible to shorten the time before the catalyst is activated. For this reason, the cerium-zirconium composite metal oxide is used as a promoter for an exhaust gas purifying catalyst

Prior art related to the cerium-zirconium composite metal oxide includes those disclosed in Japanese Unexamined Patent Publication (Kokai) No. 10-194742 and in Japanese Unexamined Patent Publication (Kokai) No. 6-279027.

However, the cerium-zirconium composite metal oxide has a drawback that the oxygen storage capacity decreases after it has been exposed to a high temperature of about 1000°C or more for a long period of time, thus showing an insufficient durability.

### SUMMARY OF THE INVENTION

Accordingly, an object of the present invention is to provide a cerium-zirconium composite metal oxide having improved durability at high temperature and showing a stable oxygen storage capacity.

The object described above can be achieved by a cerium-zirconium composite metal oxide according to claim 1. Further beneficial developments are set forth in the dependent claims. The present invention further relates to an exhaust gas purifying catalyst according to claim 7 and a method according to claim 8.

In other word, the present invention provides a cerium-zirconium composite metal oxide which has a specific composition and, especially, has an isoelectric point more than 3.5.

The term "isoelectric point" is a characteristic value measured on the basis of electrophoresis of particles contained in a slurry, and the isoelectric point of CeO₂ is 2.4 and the isoelectric point of ZrO₂ is 4.0 according to a method specified in the present invention. Accordingly, the cerium-zirconium composite metal oxide of the present invention is characterized in that it has a value of isoelectric point near to that of ZrO₂ while containing both CeO₂ and ZrO₂.

The cerium-zirconium composite metal oxide of the present invention has a value of the isoelectric point significantly higher than that of the cerium-zirconium composite metal oxide of the prior art which has similar proportions of CeO₂ and ZrO₂. An exhaust gas purifying catalyst which has Pt supported on such a cerium-zirconium composite metal oxide has durability significantly improved over that of the prior art.

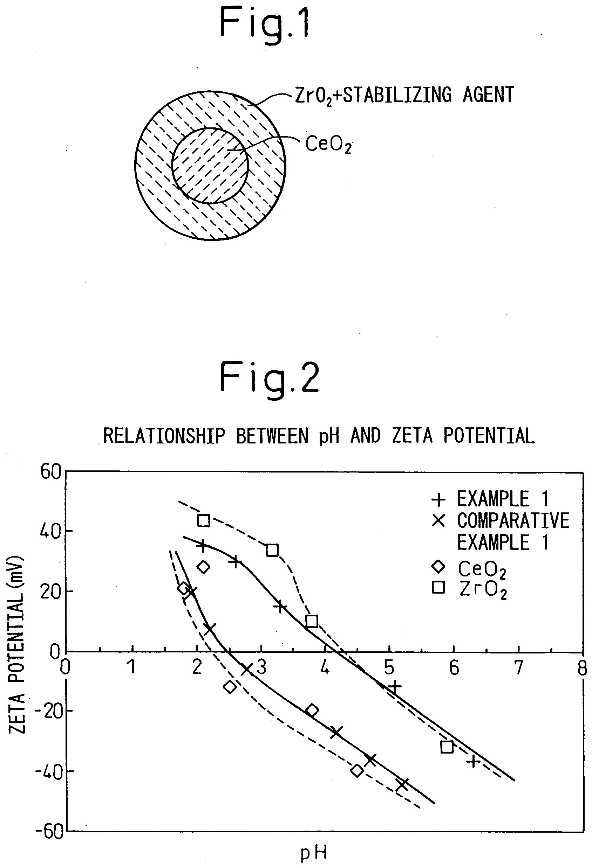

Based on these facts, it is considered that the cerium-zirconium composite metal oxide of the present invention has such a constitution as the constituent particles thereof are made mainly of ZrO₂ in the outer layer and mainly of CeO₂ inside, as shown in Fig. 1, and this constitution is stabilized when a trace of element selected from among rare earth metals coexists with ZrO₂.

In another aspect, the present invention provides a cerium-zirconium composite metal oxide, characterized in that the total mole number of Ce and Zr is at least 85% based on the total mole number of metal in the composite metal oxide and CeO₂ forms a core surrounded by ZrO₂.

When the particles of cerium-zirconium composite metal oxide are made of CeO₂ and ZrO₂ in such a constitution as described above, it is considered that ZrO₂ having high heat resistance maintains the form of particles of cerium-zirconium composite metal oxide so that CeO₂ existing inside and/or CeO₂ - ZrO₂ in the border region between the inside and the outer layer are made stable with time, thereby demonstrating the satisfactory oxygen storage capacity.

It is to be understood that Fig. 1 shows a mere model and is not intended to limit the present invention.

### BRIEF DESCRIPTION OF THE DRAWINGS

Fig. 1 shows a model of a cerium-zirconium composite metal oxide of the present invention.
Fig. 2 is a graph showing a relationship between the pH and the zeta potential in the measurement of an isoelectric point.

### DESCRIPTION OF THE PREFERRED EMBODIMENT

The present invention provides a cerium-zirconium composite metal oxide, according to claim 1, wherein the total mole number of Ce and Zr is at least 85% based on the total mole number of metal in the composite metal oxide, a molar ratio Ce/Zr is within a range from 1/9 to 9/1, and an isoelectric point of the composite metal oxide is more than 3.5 and, more preferably, the molar ratio Ce/Zr is within a range from 3/7 to 7/3 and the isoelectric point is within a range from 3.8 to 5.0.

In the present invention, the isoelectric point is defined as a value measured by the stop watch method, a version of the electrophoretic microscope method specified in JIS R1638.

The cerium-zirconium composite metal oxide refers to an oxide which contains at least Ce and Zr and may also contain another additional metallic element. The additional metallic element may be selected from among a wide range comprising s-block metals, d-block metals, p-block metals and f-block metals, such as sodium (Na), potassium (K), magnesium (Mg), calcium (Ca), barium (Ba), strontium (Sr), lanthanum (La), yttrium (Y), cerium (Ce), constitution as described above, it is considered that ZrO₂ having high heat resistance maintains the form of particles of cerium-zirconium composite metal oxide so that CeO₂ existing inside and/or CeO₂ - ZrO₂ in the border region between the inside and the outer layer are made stable with time, thereby demonstrating the satisfactory oxygen storage capacity.

It is to be understood that Fig. 1 shows a mere model and is not intended to limit the present invention.

### BRIEF DESCRIPTION OF THE DRAWINGS

Fig. 1 shows a model of a cerium-zirconium composite metal oxide of the present invention.
Fig. 2 is a graph showing a relationship between the pH and the zeta potential in the measurement of an isoelectric point.

### DESCRIPTION OF THE PREFERRED EMBODIMENT

The present invention provides a cerium-zirconium composite metal oxide, characterized in that the total mole number of Ce and Zr is at least 85% based on the total mole number of metal in the composite metal oxide, a molar ratio Ce/Zr is within a range from 1/9 to 9/1, and an isoelectric point of the composite metal oxide is more than 3.5 and, more preferably, the molar ratio Ce/Zr is within a range from 3/7 to 7/3 and the isoelectric point is within a range from 3.8 to 5.0.

In the present invention, the isoelectric point is defined as a value measured by the stop watch method, a version of the electrophoretic microscope method specified in JIS R1638.

The cerium-zirconium composite metal oxide refers to an oxide which contains at least Ce and Zr and may also contain another additional metallic element. The additional metallic element may be selected from among a wide range comprising s-block metals, d-block metals, p-block metals and f-block metals, such as sodium (Na), potassium (K), magnesium (Mg), calcium (Ca), barium (Ba), strontium (Sr), lanthanum (La), yttrium (Y), cerium (Ce), praseodymium (Pr), neodymium (Nd), samarium (Sm), europium (Eu), gadolinium (Gd), titanium (Ti), tin (Sn), zirconium (Zr), manganese (Mn), iron (Fe), cobalt (Co), nickel (Ni), chromium (Cr), niobium (Nb), copper (Cu), vanadium (V), molybdenum (Mo), tungsten (W), zinc (Zn), aluminum (Al), silicon (Si) and tantalum (Ta).

The additional metallic element mentioned above is preferably at least one of rare earth metals such as La, Y, Ce, Pr, Nd, Sm, Eu and Gd, and is contained in a concentration less than 15% based on the total mole number of metal in the cerium-zirconium composite metal oxide.

When such a rare earth metal is used as the additional metallic element, it is considered that ZrO₂ which surrounds the core is especially stabilized.

The cerium-zirconium composite metal oxide of such a constitution is preferably produced by using a ceria sol as a source of cerium and is obtained by mixing the ceria sol and a zirconium compound solution or a zirconia sol, and preferably a solution of a compound of the additional metallic element or a sol thereof in a predetermined proportion to prepare a suspension, and then drying and firing the suspension.

The term "sol" in ceria sol and zirconia sol refers to colloid of an oxide or hydrate which is dispersed in a liquid, particularly in water, which can produce a metal oxide such as ceria or zirconia when fired. Specifically, the sol may be a material which is obtained by hydrolyzing alkoxide, acetylacetonato, acetate, nitrate or the like of such element as cerium or zirconium in a solution.

The zirconium compound solution may be, for example, an aqueous solution of zirconium oxynitrate ZrO(NO₃)₂·2H₂O, zirconium oxide ZrCl₄ or the like.

The material is fired, for example, in an air atmosphere at a temperature from 600 to 900°C for several hours. The cerium-zirconium composite metal oxide thus prepared is processed in a grinding process as required, and is provided with a noble metal such as platinum, palladium or rhodium supported thereon, thereby making the exhaust gas purifying catalyst.

The exhaust gas purifying catalyst can demonstrate high and stable exhaust gas purifying performance without degradation of the oxygen storage capacity even when exposed to a high temperature of about 1000°C.

The following Examples further illustrate the present invention.

### EXAMPLES

### Example 1

A solution prepared by dissolving 41.16 g of zirconium oxynitrate and 6.48 g of yttrium nitrate in 100 g of ion-exchanged water was added to 193.33 g of a ceria sol (containing 15% by weight of Needral U-15, manufactured by TAKI CHEMICAL CO., LTD. as CeO₂) and stirred to prepare a uniform suspension.

The suspension was heated at 120°C for 24 hours to evaporate water, and then fired at 700°C for 5 hours to obtain a cerium-zirconium composite metal oxide of the present invention having the following composition (weight ratio).

CeO₂/ZrO₂/Y₂O₃ = 58/38/4

Then, 50 g of this composite metal oxide was dispersed in 300 g of ion-exchanged water to prepare a slurry. Then, 11.36 g of an aqueous solution of a diamminedinitroplatinum complex (Pt concentration: 4.4% by weight) was added to the slurry, followed by stirring for 2 hours.

The slurry was then heated at 120°C for 24 hours to evaporate water, and fired at 500°C for 2 hour to obtain an exhaust gas purifying catalyst comprising a cerium-zirconium composite metal oxide of the present invention and 1% by weight of Pt supported on the cerium-zirconium composite metal oxide.

### Example 2

A solution prepared by dissolving 6.48 g of yttrium nitrate in 50 g of ion-exchanged water and 95 g of a zirconia sol (containing 20% by weight of Zirconia HA, manufactured by Daiichi Kigensokagaku Kogyo Co., Ltd. as ZrO₂) were added to 193.33 g of the ceria sol described above and stirred to prepare a uniform suspension.

The suspension was heated to evaporate water in the same manner as in Example 1, and then fired at 700°C for 5 hours to obtain a cerium-zirconium composite metal oxide having the following composition (weight ratio) of the present invention.

CeO₂/ZrO₂/Y₂O₃ = 58/38/4

Then, in the same manner as in Example 1, 1% by weight of Pt was supported on the composite metal oxide using the diamminedinitroplatinum complex to obtain an exhaust gas purifying catalyst of the present invention.

### Example 3

A solution prepared by dissolving 6.48 g of yttrium nitrate in 50 g of ion-exchanged water and 154.5 g of a zirconia sol (including 12.5% by weight of Zirconia AC7 manufactured by DAIICHI KIGENSO KAGAKU KOGYO CO., LTD. All as ZrO₂) were added to 193.33 g of the ceria sol described above and stirred to prepare a uniform suspension.

The suspension was heated to evaporate water in the same manner as in Example 1, and then fired at 700°C for 5 hours to obtain a cerium-zirconium composite metal oxide having the following composition (weight ratio) of the present invention.

CeO₂/ZrO₂/Y₂O₃ = 58/38/4

Then, in the same manner as in Example 1, 1% by weight of Pt was supported on the composite metal oxide using the diamminedinitroplatinum complex to obtain an exhaust gas purifying catalyst of the present invention.

### Example 4

A solution prepared by dissolving 34.66 g of zirconium oxynitrate, 3.99 g of lanthanum nitrate and 8.94 g of praseodymium nitrate in 300 g of ion-exchanged water was added to 193.33 g of the ceria sol described above and then stirred to prepare a uniform suspension.

The suspension was heated to evaporate water in the same manner as in Example 1, and then fired at 700°C for 5 hours to obtain a cerium-zirconium composite metal oxide having the following composition (weight ratio) of the present invention.

CeO₂/ZrO₂/La₂O₃/Pr₆O₁₁ = 58/32/3/7

Then, in the same manner as in Example 1, 1% by weight of Pt was supported on the composite metal oxide using the diamminedinitroplatinum complex to obtain an exhaust gas purifying catalyst of the present invention.

### Comparative Example 1

A solution was prepared by dissolving 73.165 g of cerium nitrate, 41.16 g of zirconium oxynitrate and 6.48 g of yttrium nitrate in 500 g of ion-exchanged water. Ammonia water having a concentration of 1 mole/liter was added dropwise to the solution to adjust the pH value to about 9, thereby to obtain a precipitate by coprecipitation.

The solution containing the precipitate was heated to evaporate water in the same manner as in Example 1, and then fired at 700°C for 5 hours to obtain a cerium-zirconium composite metal oxide having the following composition (weight ratio) of the Comparative Example.

CeO₂/ZrO₂/Y₂O₃ = 58/38/4

Then, in the same manner as in Example 1, 1% by weight of Pt was supported on the composite metal oxide using the diamminedinitroplatinum complex to obtain an exhaust gas purifying catalyst of the Comparative Example.

### Comparative Example 2

A solution was prepared by dissolving 73.17 g of cerium nitrate, 34.66 g of zirconium oxynitrate, 3.99 g of lanthanum nitrate and 8.94 g of praseodymium nitrate in 500 g of ion-exchanged water.

A precipitate was produced from the solution by coprecipitation to evaporate water in the same manner as in Example 1, and then fired at 700°C for 5 hours to obtain a cerium-zirconium composite metal oxide having the following composition (weight ratio) of the Comparative Example.

CeO₂/ZrO₂/La₂O₃/Pr₆O₁₁ = 58/32/3/7

Then, in the same manner as in Example 1, 1% by weight of Pt was supported on the composite metal oxide using the diamminedinitroplatinum complex to obtain an exhaust gas purifying catalyst of the Comparative Example.

Comparative Example 3 29 g of cerium oxide powder was dispersed in 500 g of ion-exchanged water, and then a solution prepared by dissolving 41.16 g of zirconium oxynitrate and 6.48 g of yttrium nitrate in 200 g of ion-exchanged water was added dropwise and stirred to prepare a slurry.

Ammonia water was added dropwise to the slurry to adjust the pH value to about 9 in the same manner as in Comparative Example 1 to produce a precipitate containing zirconium and yttrium.

The slurry was heated to evaporate water, and then fired at 700°C for 5 hours to obtain a cerium-zirconium composite metal oxide having the following composition (weight ratio) of the Comparative Example.

CeO₂/ZrO₂/Y₂O₃ = 58/38/4

Then, in the same manner as in Comparative Example 1, 1% by weight of Pt was supported on the composite metal oxide using the diamminedinitroplatinum complex to obtain an exhaust gas purifying catalyst of the Comparative Example.

### Measurement of isoelectric point

Values of isoelectric point of the samples of cerium-zirconium composite metal oxide produced in Examples 1 to 4 and Comparative Examples 1 to 3 were measured by the stop watch method, a version of the electrophoretic microscope method specified in JIS R1638. The results are summarized in Table 1.

A relationship between the pH and the zeta potential measured so as to determine the isoelectric point by the measuring method described above for the cerium-zirconium composite metal oxide of Example 1 and Comparative Example 1, CeO₂ powder and ZrO₂ powder are shown in Fig. 2.

These results show a clear difference in the isoelectric point of the cerium-zirconium composite metal oxide between the Examples and the Comparative Examples. The Examples showed isoelectric points near that of ZrO₂ powder, while the Comparative Examples showed isoelectric points near that of CeO₂ powder.

As the compositions of the cerium-zirconium composite metal oxide were the same between Examples 1 to 3 and Comparative Examples 1 and 3, and Example 4 and Comparative Example 2, the difference described above is considered to be attributed to the form of CeO₂ and ZrO₂. It is believed that the Examples showed the isoelectric point near that of ZrO₂ powder since the cores made of CeO₂ are surrounded by ZrO₂ in the Examples as shown in Fig. 1.

### Evaluation of catalyst performances

The samples of cerium-zirconium composite metal oxide made in Examples 1 to 4 and Comparative Examples 1 to 3 were compressed and crushed to make pellets about 2 mm in diameter. About 2.0 g of each of the samples was taken and tested to evaluate catalyst performances.

The exhaust gas purifying catalysts were fired at 1000°C for 3 hours for the purpose of comparing the durability, before the evaluation of catalyst performances.

Evaluation test was conducted by measuring the rate of neutralizing the components C₃O₆ (HC), NO and CO while raising the catalyst bed temperature at a rate of 10°C /minute up to 400°C, and changing between carbon rich gas and lean gas having compositions shown in Table 1 at intervals of one minute, so that any difference in the oxygen storage capacity can be observed distinctly. The catalytic performances were evaluated in terms of the temperature at which 50% of the component was neutralized. The test results are summarized in Table 2.

**(Table 1) Gas composition for evaluation**

| | N₂ (%) | CO₂ (%) | NO (ppm) | CO (%) | C₃H₆ (ppmC) | H₂ (%) | O₂ (%) | H₂O (%) |
|---|---|---|---|---|---|---|---|---|
| Rich gas | Balance | 10 | 2200 | 2.80 | 2500 | 0.27 | 0.77 | 10 |
| Lean gas | Balance | 10 | 2200 | 0.81 | 2500 | 0 | 1.7 | 10 |

**(Table 2) Results of the measurement of catalyst performances and isoelectric point**

| | Composition | Weight ratio | HC | NO | CO | Isoelectric point |
|---|---|---|---|---|---|---|
| Example 1 | Ce-Zr-Y-O | 58/38/4 | 234 | 266 | 180 | 4.2 |
| Example 2 | Ce-Zr-Y-O | 58/38/4 | 253 | 286 | 221 | 3.9 |
| Example 3 | Ce-Zr-Y-O | 58/38/4 | 263 | 301 | 216 | 4.1 |
| Example 4 | Ce-Zr-La-Pr-O | 58/32/3/7 | 245 | 270 | 201 | 4.0 |
| Comparative Example 1 | Ce-Zr-Y-O | 58/38/4 | 280 | 308 | 242 | 2.5 |
| Comparative Example 2 | Ce-Zr-La-Pr-O | 58/32/3/7 | 269 | 303 | 253 | 2.2 |
| Comparative Example 3 | Ce-Zr-Y-O | 58/38/4 | 302 | 366 | 299 | 3.3 |

A cerium-zirconium composite metal oxide having improved durability at high temperature and a stable oxygen storage capacity is provided. The cerium-zirconium composite metal oxide is characterized in that the total mole number of Ce and Zr is at least 85% based on the total mole number of metal in the composite metal oxide, a molar ratio Ce/Zr is within a range from 1/9 to 9/1, and an isoelectric point of the composite metal oxide is more than 3.5. Preferably, the molar ratio Ce/Zr is within a range from 3/7 to 7/3 and the isoelectric point is within a range from 3.8 to 5.0, and the cerium-zirconium composite metal oxide contains a rare earth metal (excluding Ce) in a concentration of less than 15% by mole based on the total mole number of metal in the composite metal oxide. Also the present invention provides a cerium-zirconium composite metal oxide, characterized in that CeO₂ forms a core surrounded by ZrO₂.

## Claims

1. A cerium-zirconium composite metal oxide for an exhaust gas purifying catalyst, wherein the total mole number of Ce and Zr is at least 85% based on the total mole number of metal in the composite metal oxide, a molar ratio Ce/Zr is within a range from 1/9 to 9/1, CeO₂ forms a core surrounded by ZrO₂ and the isoelectric point of the composite metal oxide is more than 3.5 as measured according to JIS R1638,.

2. The cerium-zirconium composite metal oxide according to claim 1, which is obtainable by firing a precursor of the cerium-zirconium composite metal oxide at a temperature of 600 to 900°C.

3. The cerium-zirconium composite metal oxide according to claim 1 or 2, which is obtainable by mixing ceria sol and a zirconium compound solution or a zirconium sol and then drying and firing the mixture.

4. The cerium-zirconium composite metal oxide according to any one of claims 1 to 3, wherein the molar ratio Ce/Zr is within a range from 3/7 to 7/3 and the isoelectric point is within a range from 3.8 to 5.0.

5. The cerium-zirconium composite metal oxide according to any one of claims 1 to 4, which contains rare earth metal (excluding Ce) in a concentration of less than 15% by mole based on the total mole number of metal in the composite metal oxide.

6. The cerium-zirconium composite metal oxide according to claim 1, wherein the CeO₂ core has a diameter within a range from 5 to 20 nm.

7. An exhaust gas purifying catalyst comprising the cerium-zirconium composite metal oxide of any one of claims 1 to 6 and a noble metal supported on the cerium-zirconium composite metal oxide.

8. A method for synthesizing the cerium-zirconium composite metal oxide of any one of claims 1 to 6, which comprises mixing a ceria sol and a zirconium compound solution or a zirconia sol to prepare a suspension, and drying and firing the mixture at a temperature of 600° to 900°C.

## Patentansprüche

1. Cer-Zirconium-Verbundmetalloxid für einen Abgas-Reinigungskatalysator, wobei die Gesamtmolzahl von Ce und Zr mindestens 85% basierend auf der Gesamtmolzahl des Metalls in dem Verbundmetalloxid ist, ein Molverhältnis Ce/Zr innerhalb eines Bereiches von 1/9 bis 9/1 ist, CeO₂ einen Kern umgeben von ZrO₂ bildet und der isoelektrische Punkt des Verbundmetalloxids mehr als 3,5 gemessen nach JIS R1638 ist,.

2. Cer-Zirconium-Verbundmetalloxid nach Anspruch 1, welches erhältlich ist durch Brennen eines Präkursors des Cer-Zirconium-Verbundmetalloxids bei einer Temperatur von 600 bis 900°C.

3. Cer-Zirconium-Verbundmetalloxid nach Anspruch 1 oder 2, welches erhältlich ist durch Mischen von Cer-Sol und einer Zirkoniumverbindungslösung oder einem Zirkonium-Sol und dann Trocknen und Brennen der Mischung.

4. Cer-Zirconium-Verbundmetalloxid nach einem der Ansprüche 1 bis 3, wobei das Molverhältnis Ce/Zr innerhalb eines Bereiches von 3/7 bis 7/3 ist und der isoelektrische Punkt innerhalb eines Bereiches von 3,8 bis 5,0 ist.

5. Cer-Zirconium-Verbundmetalloxid nach einem der Ansprüche 1 bis 4, welches Seltenerdmetall (ausgenommen Ce) in einer Konzentration von weniger als 15 Mol-% basierend auf der Gesamtmolzahl des Metalls in dem Verbundmetalloxid enthält.

6. Cer-Zirconium-Verbundmetalloxid nach Anspruch 1, wobei der CeO₂-Kern einen Durchmesser innerhalb eines Bereiches von 5 bis 20 nm aufweist.

7. Abgas-Reinigungskatalysator umfassend das Cer-Zirconium-Verbundmetalloxid nach einem der Ansprüche 1 bis 6 und ein Edelmetall gestützt an dem Cer-Zirconium-Verbundmetalloxid.

8. Verfahren zum Synthetisieren des Cer-Zirconium-Verbundmetalloxids eines jeden der Ansprüche 1 bis 6, welches Mischen eines Cer-Sols und einer Zirkoniumverbindungslösung oder eines Zirkonium-Sols, um eine Suspension zu erstellen, und Trockenen und Brennen der Mischung bei einer Temperatur von 600° bis 900°C umfasst.

## Revendications

1. Oxyde de métal composite de cérium-zirconium pour un catalyseur de purification de gaz d'échappement, dans lequel le nombre total de moles de Ce et Zr est d'au moins 85 % rapporté au nombre total de moles de métal dans l'oxyde de métal composite, un rapport molaire Ce/Zr se trouve dans un intervalle de 1/9 à 9/1, CeO₂ forme un noyau entouré par ZrO₂ et le point isoélectrique de l'oxyde de métal composite est supérieur à 3,5 comme mesuré selon JIS R1638.

2. Oxyde de métal composite de cérium-zirconium selon la revendication 1, lequel peut être obtenu par cuisson d'un précurseur de l'oxyde de métal composite de cérium-zirconium à une température de 600 à 900°C.

3. Oxyde de métal composite de cérium-zirconium selon la revendication 1 ou 2, lequel peut être obtenu par mélange de sol d'oxyde de cérium et d'une solution de composé de zirconium ou d'un sol de zirconium et puis séchage et cuisson du mélange.

4. Oxyde de métal composite de cérium-zirconium selon l'une quelconque des revendications 1 à 3, dans lequel le rapport molaire Ce/Zr se trouve dans un intervalle de 3/7 à 7/3 et le point isoélectrique se trouve dans un intervalle de 3,8 à 5,0.

5. Oxyde de métal composite de cérium-zirconium selon l'une quelconque des revendications 1 à 4, lequel contient un métal de terre rare (à l'exclusion de Ce) dans une concentration inférieure à 15 % en mole rapporté au nombre total de mole de métal dans l'oxyde de métal composite.

6. Oxyde de métal composite de cérium-zirconium selon la revendication 1, dans lequel le noyau de CeO₂ présente un diamètre dans un intervalle de 5 à 20 nm.

7. Catalyseur de purification de gaz d'échappement comprenant l'oxyde de métal composite de cérium-zirconium selon l'une quelconque des revendications 1 à 6 et un métal noble supporté sur l'oxyde de métal composite de cérium-zirconium.

8. Procédé de synthèse de l'oxyde de métal composite de cérium-zirconium selon l'une quelconque des revendications 1 à 6, lequel comprend le mélange d'un sol d'oxyde de cérium et d'une solution de composé de zirconium ou d'un sol d'oxyde de zirconium pour préparer une suspension, et séchage et cuisson du mélange à une température de 600° à 900°C.
